# EUROPÄISCHE PATENTANMELDUNG

(11) **EP 2 151 640 A2**
(43) Veröffentlichungstag der Anmeldung: **10.02.2010**
(21) Anmeldenummer: 09166669.3
(22) Anmeldetag: 29.07.2009
(51) Int. Cl.: F24J 2/16, F24J 2/22, F24J 2/46

(54) **Solarkollektor mit Absorber mit flexiblen Absorberelementen**

(30) Priorität: 09.08.2008 DE 102008037249
(71) Anmelder: Robert Bosch GmbH, 70442 Stuttgart (DE)
(72) Erfinder: Stumpp, Hermann, 73730 Esslingen (DE); Clement, Uwe, 73114 Schlat (DE)

(57) **Zusammenfassung**

Die Erfindung betrifft eine Absorbereinrichtung für einen Solarkollektor (1) und einen Solarkollektor (1), insbesondere für einen Flachkollektor, zur Durchleitung eines solarstrahlungsabsorbierenden Solarfluids, umfassend ein von dem Solarfluid durchströmbares Leitungssystem (3) und mindestens ein Absorberelement (2) zum Absorbieren von Solarstrahlung.

Es ist eine Aufgabe der Erfindung, eine flexible Begrenzung einer Absorbertemperatur zu schaffen, wobei ein einfacher Aufbau gewährleistet ist. Insbesondere ist es eine Aufgabe, einen Überhitzungsschutz zu realisieren, welcher in Abhängigkeit von einem Betrieb einer Förderpumpe und einer einfallenden Solarstrahlung ausgerichtet ist.

Gekennzeichnet sind die Absorbereinrichtung und der Solarkollektor (1) dadurch, dass das Absorberelement (2) zumindest teilweise in dem Leitungssystem (3) angeordnet ist.

## Beschreibung

Die Erfindung betrifft eine Absorbereinrichtung für einen Solarkollektor, insbesondere für einen Flachkollektor, zur Durchleitung eines Solarfluids nach dem Oberbegriff des Patentanspruches 1. Weiter betrifft die Erfindung einen Solarkollektor, insbesondere einen vollflächig durchströmbaren Solarkollektor, mit einer Absorbereinrichtung nach dem Oberbegriff des Patentanspruchs 10.

Aus dem Stand der Technik sind thermische Solarkollektoren, umfassend einen solarstrahlenabsorbierenden Absorber und ein in den Absorber eingebettetes und/oder in dem Absorber ausgebildetes Leitungssystem, bekannt. Bei derartigen Solarkollektoren wird das den Absorber durchströmende Solar- oder Kollektorfluid durch die einfallende Solarstrahlung erwärmt. Dabei treten immer Wärmeverluste auf, d.h. der Absorber gibt immer einen Teil der Wärme nicht an das Solarfluid ab, sondern die Wärme wird als Umgebungswärmeverlust abgestrahlt. Der Zustand, in welchem die aufgenommene Wärme vollständig als Wärmeverlust abgegeben wird und nicht nutzbar ist, wird als Stagnation bezeichnet. Je effektiver ein Solarkollektor die Solarstrahlung in Wärme umwandelt, desto höher ist die Temperatur des Absorbers in einem Stagnationsfall. Eine Stagnationstemperatur kann bei Flachkollektoren bei hohen Außenlufttemperaturen und maximaler Solarstrahlung zwischen 180 und 230°C liegen.

Ein Temperaturniveau größer 180°C kann zu Ineffektivität führen und kann sich insbesondere negativ auf die Robustheit des Solarkollektors auswirken.

Aus diesem Grunde sind Lösungen vorgeschlagen worden, die sich grob in drei Kategorien unterteilen lassen. Einmal sind als Überhitzungsschutz Mittel vorgesehen, welche einfallende Solarstrahlung beeinflussen, das heißt, welche die einfallende Solarstrahlungsmenge begrenzen. Weiterhin sind Lösungen bekannt, bei denen Mittel zur Beeinflussung der Wärmeverluste des Solarkollektors vorgesehen sind, welche also die Wärme besser oder schlechter ableiten. Zudem sind in noch anderen Lösungen Kühlsysteme vorgesehen, die einen permanenten Wärmetransport realisieren. Derartige Lösungen sind mit Nachteilen verbunden, da diese statisch sind oder mit einem hohen Aufwand und hoher Komplexität verbunden sind, sodass sich ein effizienter und situationsgerechter Betrieb des Solarkollektors nicht realisieren lässt.

Der Erfindung liegt die Aufgabe zugrunde, eine flexible Begrenzung einer Absorbertemperatur zu schaffen, wobei ein einfacher Aufbau gewährleistet ist. Insbesondere ist es eine Aufgabe, einen Überhitzungsschutz zu realisieren, welcher in Abhängigkeit von einem Betrieb einer Förderpumpe und einer einfallenden Solarstrahlung optimiert ist.

Erfindungsgemäß wird dies durch die Gegenstände mit den Merkmalen des Patentanspruches 1 und des Patentanspruchs 10 gelöst. Vorteilhafte Weiterbildungen sind den Unteransprüchen zu entnehmen.

Die erfindungsgemäße Absorbereinrichtung für einen Solarkollektor, insbesondere für einen Flachkollektor, zur Durchleitung eines Solarfluids, umfassend ein von dem Solarfluid durchströmbares Leitungssystem und mindestens ein Absorberelement zum Absorbieren von Solarstrahlung, ist **dadurch gekennzeichnet, dass** das Absorberelement zumindest teilweise in dem Leitungssystem angeordnet ist. Mit anderen Worten wird das Absorberelement von dem in dem Leitungssystem geführten Solarfluid umströmt.

In einer Ausführungsform der vorliegenden Erfindung ist vorgesehen, dass das Absorberelement mindestens einen absorbierenden Bereich aufweist und/oder mindestens einen reflektierenden Bereich aufweist. Bei einer weiteren Ausführungsform der vorliegenden Erfindung ist vorgesehen, dass das Absorberelement Mittel zum Ausrichten des absorbierenden Bereichs zu oder weg von einer Solarstrahlung aufweist, sodass das Absorberelement je nach Ausrichtung mehr oder weniger Solarstrahlung absorbiert.

In noch einer weiteren Ausführungsform der vorliegenden Erfindung ist vorgesehen, dass die Mittel als mindestens ein Element mit Biegeflexibilität ausgebildet ist, welches einteilig, insbesondere als ein gemeinsames Bauteil, mit dem Absorberelement ausgebildet ist, wobei das Element das Absorberelement mit dem absorbierenden Bereich zu oder weg von der Solarstrahlung bei Aufbringen einer entsprechenden Biegekraft biegend ausrichtet.

Ein Ausführungsbeispiel der vorliegenden Erfindung sieht vor, dass die Mittel als gelenkige Lagerung ausgebildet sind, welche das Absorberelement mit dem absorbierenden Bereich zu oder weg von der Solarstrahlung bei Aufbringen einer entsprechenden Biegekraft auslenkend ausrichten.

Ein weiteres Ausführungsbeispiel der vorliegenden Erfindung sieht vor, dass das Absorberelement im Wesentlichen zweidimensional als plattenförmiges Element ausgebildet ist. Noch ein weiteres Ausführungsbeispiel der vorliegenden Erfindung sieht vor, dass der absorbierende Bereich als eine Seite des im Wesentlichen zweidimensionalen Absorberelements ausgebildet ist. Noch ein anderes Ausführungsbeispiel der vorliegenden rfindung sieht vor, dass der reflektierende Bereich als die andere Seite des im Wesentlichen zweidimensionalen Absorberelements ausgebildet ist. Weiterhin können Stellmittel vorgesehen sein, um das Absorberelement in eine entsprechende Ausrichtung zur Solarstrahlung auszurichten.

Der erfindungsgemäße Solarkollektor, insbesondere ein vollflächig durchströmbarer Solarkollektor, mit einer Absorbereinrichtung, ist **dadurch gekennzeichnet, dass** die Absorbereinrichtung als erfindungsgemäße Absorbereinrichtung ausgebildet ist.

Mit dem erfindungsgemäßen Absorber und dem erfindungsgemäßen Solarkollektor werden insbesondere die folgenden Vorteile realisiert:
Dadurch, dass das Absorberelement zumindest teilweise in dem Leitungssystem angeordnet ist, lässt sich eine direkte Kopplung des Absorberinstruments mit dem Leitungsstrom des Solarfluids und damit mit einer das Solarfluid fördernden Solarpumpe realisieren. Die Absorberelemente lassen sich als flexible Struktur ausbilden, sodass diese durch die Strömung des Solarfluids mitbewegt werden und so entsprechend der Strömung ausgerichtet werden. Insbesondere sind die Absorberelemente als dünne, plattenförmige Elemente ausgebildet, welche an einer Seite eine absorbierende Beschichtung und auf der entgegengesetzten Seite eine reflektierende Beschichtung aufweisen. Bei Durchströmung des Solarkollektors mit Solarfluid, das heißt bei Betrieb einer Solarpumpe, neigen sich die Absorberelemente aufgrund einer Strömungskraft in die Strömungsrichtung, wobei die gut absorbierende Seite oder Fläche nach oben, das heißt in Richtung der einfallenden Solarstrahlung, ausgerichtet wird. Kommt es nun zu einer erhöhten Temperatur in dem Absorber aufgrund starker Solareinstrahlung, also in einer Betriebssituation, in welcher der entsprechende Speicher gefüllt und die Solarpumpe entsprechend abgeschaltet ist, sodass der Solarkollektor nicht mehr mit Solarfluid durchströmt wird, richten sich die Absorberelemente auf und verringern so die der Solarstrahlung entgegengebrachte Absorptionsfläche. Auf diese Weise kann die Kollektortemperatur im Stagnationsfall deutlich reduziert werden, wobei die Effizienz während eines Betriebs der Solarpumpe unverändert groß bleibt.

Somit können die Lamellen auch aus einem Material sein und damit auf beiden Seiten absorbieren, wenn durch einen Dichteunterschied zum Fluid sichergestellt wird, dass sich die Lamellen bei Nullumlauf senkrecht zur Kollektorebene ausrichten. Ein wichtiges Merkmal ist es dabei, dass die Kollektorrückwand, an der die Lamellen angebracht sind, Solarstrahlung so gut wie möglich reflektiert. Andererseits, wenn die Lamellenrückseite reflektierend ist, und sich die Lamellen bei Nullumlauf immer entgegen der eigentlichen Strömungsrichtung ausrichten, muss die Rückwand nicht reflektierend sein.

Die Absorberelemente können auch entgegengesetzt der durch die Strömung bewirkten Ausrichtung ausgerichtet werden, sodass eine reflektierende Oberfläche zu der einfallenden Solarstrahlung weist. Hierzu können beispielsweise entsprechende Stellmittel vorgesehen werden, wie zum Beispiel Rückstellmittel mittels Federn. Bei Betrieb der Solarpumpe wirkt das durchströmende Solarfluid selbst als Stellmittel, welches die Absorberelemente entsprechend ausrichtet. Die Absorberelemente können komplett in dem Leitungssystem angeordnet sein oder können mit einem Teil in dieses hineinragen. Auf diese Weise ist eine flexible Regelung einer Absorbertemperatur gewährleistet. Durch eine entsprechende Biegeflexibilität der Absorberelemente, welche durch integrierte, biegeflexible Elemente oder durch zusätzliche Elemente realisiert werden kann, oder durch geeignete Materialwahl und

Bemessung der Absorberelemente selbst, ist eine Ausrichtung entsprechend gewährleistet. Außer einer Biegeflexibilität lässt sich das Neigen auch mittels gelenkigen Lagerungen und dergleichen realisieren. Mit den aufgeführten Mitteln lassen sich die Absorberelemente ähnlich wie zum Beispiel Seegras ausbilden, welches sich mit einer Strömung mitbewegt, wobei die der Solarstrahlung entgegengerichteten Flächen unterschiedlich ausgebildet sind.

Die Zeichnungen stellen ein Ausführungsbeispiel der Erfindung dar. Es zeigt jeweils schematisch:
- Fig. 1: eine quer geschnittene Perspektivansicht eines Ausschnitts einer Absorbereinrichtung mit Absorberelementen in einem ersten Zustand und
- Fig. 2: den Ausschnitt nach Fig. 1 in einem zweiten Zustand.

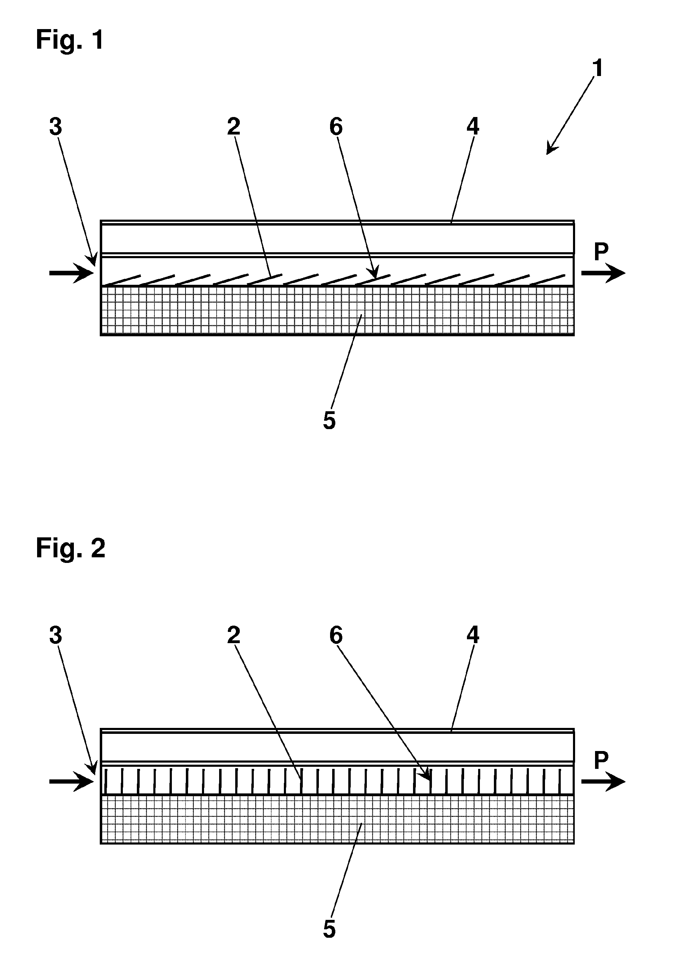

Figur 1 zeigt schematisch eine quergeschnittene Perspektivansicht eines Ausschnitts einer Absorbereinrichtung oder kurz eines Solarkollektors 1 mit mehreren Absorberelementen 2 in einem ersten Zustand. Der Solarkollektor 1 ist etwa quaderförmig aufgebaut und weist ein Leitungssystem 3 auf, welches vorliegend als Kanal ausgebildet ist, der sandwichartig zwischen einer transparenten Abdeckscheibe 4, die bevorzugt aus Glas ausgebildet ist, und einer Dämmungsschicht 5 angeordnet ist. Das Leitungssystem 3 kann in Richtung der Abdeckscheibe 4 durch eine vorzugsweise transparente Absorberabdeckplatte verschlossen sein. Durch das Leitungssystem 3 strömt ein Solarfluid in eine durch den Pfeil P gekennzeichnete Strömungsrichtung. In dem Leitungssystem 3 sind mehrere Absorberelemente 2 angeordnet, die vorliegend lamellenartig, das heißt als dünne, plattenartige Elemente, ausgebildet sind, und an einer der Dämmungsschicht 5 zugewandten Seite des Leitungssystems 3 gelagert sind. Die Absorberelemente 2 sind derart gelagert, dass sie sich aufgrund des durchströmenden Solarfluids in Richtung des Pfeils P neigen, sodass diese einen möglichst geringen Strömungswiderstand für das Solarfluid bilden, und das Fluid im Wesentlichen ungehindert durch das Leitungssystem 3 strömen lassen. Aufgrund der mit der Strömung einwirkenden Strömungskraft auf die Lamellen, sind diese bei entsprechender Strömung so geneigt, dass eine Seite der im Wesentlichen zweidimensional ausgebildeten Lamellen, zu der Abdeckscheibe 4 weist, durch welche üblicherweise die Solarstrahlung einfällt. Die entsprechende Seite ist als absorbierender Bereich 6 ausgebildet, welcher geeignet für die Absorption der Solarstrahlung ausgebildet ist. Der in Figur 1 dargestellte Zustand entspricht somit einem normalen Betriebszustand vor einem Stagnationsfall.

Der Stagnationsfall, d. h. ein zweiter Zustand, ist in Figur 2 dargestellt. Im Unterschied zu Figur 1 strömt das Solarfluid in Figur 2 aufgrund einer im Stagnationsfall abgeschalteten Solarpumpe nicht mehr durch das Leitungssystem 3, sondern verharrt dort im Wesentlichen ohne zu strömen oder strömt allenfalls mit einer geringen Geschwindigkeit, sodass eine Ausrichtung der Lamellen gemäß Figur 1 nicht erfolgt. Entsprechend sind die lamellenartig ausgebildeten Absorberelemente 2 nicht mehr durch die Strömung beeinflusst und befinden sich somit in einer aufgerichteten Position, wie in Figur 2 dargestellt. Durch die aufgerichtete Position sind die absorbierenden Bereiche 6 nicht mehr zur Solarstrahlung ausgerichtet, sondern lediglich die schmale Kante der Absorberelemente 2. Dabei weisen die Absorberelemente 2 mit ihrer schmalen Fläche in Richtung der Solarstrahlung und die absorbierenden Bereiche 6 sind von der Solarstrahlung abgewandt. Bei eventuell schräg einfallender Solarstrahlung lassen sich die Absorberelemente 2 zudem derart ausrichten, dass auch die schmale Seite zur Solarstrahlung senkrecht ausgerichtet ist, oder eine hier nicht sichtbar dargestellte Seite mit reflektierenden Bereichen zur Solarstrahlung ausgerichtet ist. Dadurch, dass die schmale Seite oder die reflektierende Seite der Solarstrahlung ausgesetzt ist, absorbieren die Absorberelemente 2 keine oder nur wenig Solarstrahlung, sodass es nicht zu einer weiteren Erhitzung der Absorberelemente 2 und damit des Solarkollektors 1 kommt. Durch die flexible Struktur der Absorberelemente 2 ist somit eine Ausrichtung der Absorberelemente 2 mit dem Betrieb einer Solarpumpe und der einfallenden Solarstrahlung bzw. der Absorbertemperatur gekoppelt, sodass ein wirkungsvoller automatischer Überhitzungsschutz des Solarkollektors 1 gegeben ist.

## Patentansprüche

1. Absorbereinrichtung für einen Solarkollektor (1), insbesondere für einen Flachkollektor, zur Durchleitung eines Solarfluids, umfassend ein von dem Solarfluid durchströmbares Leitungssystem (3) und mindestens ein Absorberelement (2) zum Absorbieren von Solarstrahlung,
**dadurch gekennzeichnet, dass** das Absorberelement (2) zumindest teilweise in dem Leitungssystem (3) angeordnet ist.

2. Absorbereinrichtung nach Anspruch 1,
**dadurch gekennzeichnet, dass** das Absorberelement (2) mindestens einen absorbierenden Bereich (6) aufweist und/oder mindestens einen reflektierenden Bereich aufweist.

3. Absorbereinrichtung nach Anspruch 1 oder 2,
**dadurch gekennzeichnet, dass** das Absorberelement (2) Mittel zum Ausrichten des absorbierenden Bereichs zu oder weg von einer Solarstrahlung aufweist, sodass das Absorberelement (2) je nach Ausrichtung mehr oder weniger Solarstrahlung absorbiert.

4. Absorbereinrichtung nach einem der vorherigen Ansprüche 1 bis 3,
**dadurch gekennzeichnet, dass** die Mittel als mindestens ein Element mit Biegeflexibilität ausgebildet ist, welches einteilig, insbesondere als ein gemeinsames Bauteil, mit dem Absorberelement (2) ausgebildet ist, wobei das Element das Absorberelement (2) mit dem absorbierenden Bereich (6) zu oder weg von der Solarstrahlung bei Aufbringen einer entsprechenden Biegekraft biegend ausrichtet.

5. Absorbereinrichtung nach einem der vorherigen Ansprüche 1 bis 4,
**dadurch gekennzeichnet, dass** die Mittel als gelenkige Lagerung ausgebildet sind, welche das Absorberelement (2) mit dem absorbierenden Bereich (6) zu oder weg von der Solarstrahlung bei Aufbringen einer entsprechenden Biegekraft auslenkend ausrichten.

6. Absorbereinrichtung nach einem der vorherigen Ansprüche 1 bis 5,
**dadurch gekennzeichnet, dass** das Absorberelement (2) im Wesentlichen zweidimensional als plattenförmiges Element ausgebildet ist.

7. Absorbereinrichtung nach einem der vorherigen Ansprüche 1 bis 6,
**dadurch gekennzeichnet, dass** der absorbierende Bereich (6) als eine Seite des im Wesentlichen zweidimensionalen Absorberelements (2) ausgebildet ist.

8. Absorbereinrichtung nach einem der vorherigen Ansprüche 1 bis 7,
**dadurch gekennzeichnet, dass** der reflektierende Bereich als die andere Seite des im Wesentlichen zweidimensionalen Absorberelements (2) ausgebildet ist.

9. Absorbereinrichtung nach einem der vorherigen Ansprüche 1 bis 8,
**dadurch gekennzeichnet, dass** Stellmittel vorgesehen sind, um das Absorberelement (2) in eine entsprechende Ausrichtung zur Solarstrahlung auszurichten.

10. Solarkollektor (1), insbesondere ein vollflächig durchströmbarer Solarkollektor, mit einer Absorbereinrichtung ,
**dadurch gekennzeichnet, dass** die Absorbereinrichtung nach einem der vorherigen Ansprüche 1 bis 9 ausgebildet ist.
